# EUROPÄISCHE PATENTSCHRIFT

(11) **EP 1 841 624 B1**
(45) Veröffentlichungstag und Bekanntmachung des Hinweises auf die Patenterteilung: **11.08.2010**
(21) Anmeldenummer: 05784201.5
(22) Anmeldetag: 15.09.2005
(51) Int. Cl.: B60R 21/01

(54) **SITZBELEGUNGSDRUCKSENSOR**
SEAT OCCUPATION PRESSURE SENSOR
CAPTEUR DE PRESSION D'OCCUPATION DE SIEGE

(30) Priorität: 29.11.2004 DE 102004057600
(43) Veröffentlichungstag der Anmeldung: 10.10.2007
(73) Patentinhaber: Bayerische Motoren Werke Aktiengesellschaft, 80809 München (DE)
(72) Erfinder: HENZE, Kartsen, 80538 München (DE); BAUR, Richard, 85276 Pfaffenhofen (DE)
(86) Internationale Anmeldenummer: PCT/EP2005/009916
(87) Internationale Veröffentlichungsnummer: WO 2006/058573

(56) Entgegenhaltungen:
- EP-A- 0 891 898
- DE-C1- 4 237 072
- US-B1- 6 348 663
- PATENT ABSTRACTS OF JAPAN Bd. 2000, Nr. 01, 31. Januar 2000 (2000-01-31) & JP 11 297153 A (FUJIKURA LTD), 29. Oktober 1999 (1999-10-29)

## Beschreibung

Die vorliegende Erfindung betrifft einen Sitzbelegungssensor, insbesondere zur Verwendung bei der Sitzbelegungserkennung in einem Fahrzeug.

Ein derartiger Sitzbelegungssensor ist aus der nicht vorveröffentlichten Deutschen Patentanmeldung 10 2004 015 408.2 bekannt. Er dient insbesondere bei nichtsicherheitskritischen Anwendungen, beispielsweise einem Sicherheitsgurt-Wamsystem dazu, einen in dem Fahrzeugsitz einsitzenden Passagier zum Anlegen des Sicherheitsgurtes zu mahnen. Ein derartiges Warnsystem gibt beispielsweise ein akustisches oder optisches Signal aus, wenn der Fahrzeugsitz belegt ist, ohne dass das Gurtschloss des zugeordneten Sicherheitsgurtes eingeschnappt ist. Der Sitzbelegungssensor in einem derartigen System muss im wesentlichen eine Unterscheidung einer Sitzbelegung durch einen Passagier und eine Belegung durch einen Gegenstand, wie beispielsweise eine Handtasche, ermöglichen. Eine aufwendigere Klassifizierung der Sitzbelegung ist bei dieser Anwendung nicht notwendig.

Das dokument US-B1-348663 offenbart eine Vorrichtung gemäß dem obergriff des anspruchs 1.

Aufgabe der vorliegenden Erfindung ist es, bei einem derartigen Sitzbelegungssensor eine Funktionsdiagnose zu ermöglichen.

Diese Aufgabe wird erfindungsgemäß gelöst durch einen Sitzbelegungssensor nach Patentanspruch 1.

Im einfachsten Fall beträgt der elektrische Widerstand der Schaltelemente im aktivierten Fall Null und im deaktivierten Fall unendlich. Eine Leitungsunterbrechung lässt sich ohne die erfindungsgemäße Ausgestaltung vom deaktivierten Zustand nicht unterscheiden. Ist die logische UND-Verknüpfung durch eine Hintereinanderschaltung der beiden Schaltelemente realisiert, ergeben sich eindeutige und in der Regel deutlich voneinander unterscheidbare Werte für den Gesamtwiderstand des Sitzbelegungssensors bei einem Fehler und bei ordnungsgemäßer Funktion in den vier möglichen Betriebszuständen jeweils nur der eine oder der andere aktiviert, beide deaktiviert und beide aktiviert.

In einer besonders einfachen Ausgestaltung der Erfindung sind das erste und das zweite Schaltelement beispielsweise in Serie geschaltet und die elektrischen Widerstandselemente entsprechend jeweils zu einem der Schaltelemente parallel geschaltet.

Es ist anzumerken, dass der Sitzbelegungssensor mehr als zwei Schaltelemente aufweisen kann. So können beispielsweise drei oder mehr Schaltelemente in einer logischen UND-Verknüpfung verschaltet sein. Alternativ können mehrere Gruppen von jeweils zwei oder mehr Schaltelementen in UND-Verknüpfung vorgesehen sein.

In einer bevorzugten Ausgestaltung der Erfindung umfassen das erste und/oder zweite Schaltelement eine Mehrzahl von einzelnen Schaltzellen, die untereinander derart verschaltet sind, dass eine logische ODER-Verknüpfung realisiert ist. Die einzelnen Schaltzellen eines Schaltelements können beispielsweise parallel verschaltet sein. Die Verschaltung der einzelnen Schaltzellen in einer ODER-Verknüpfung bewirkt, dass das Schaltelement bereits ausgelöst ist, sobald eine einzelne Schaltzelle durch eine Druckkraft ausgelöst ist. Sind die einzelnen Schaltzellen in einem Cluster über eine bestimmte Zone des Fahrzeugsitzes verteilt angeordnet, so stellt diese Zone den aktiven Bereich der jeweiligen Schaltelemente dar. Eine Belegung an einem beliebigen Ort innerhalb dieser Zone wird demnach als eine Belegung des Schaltelementes erkannt.

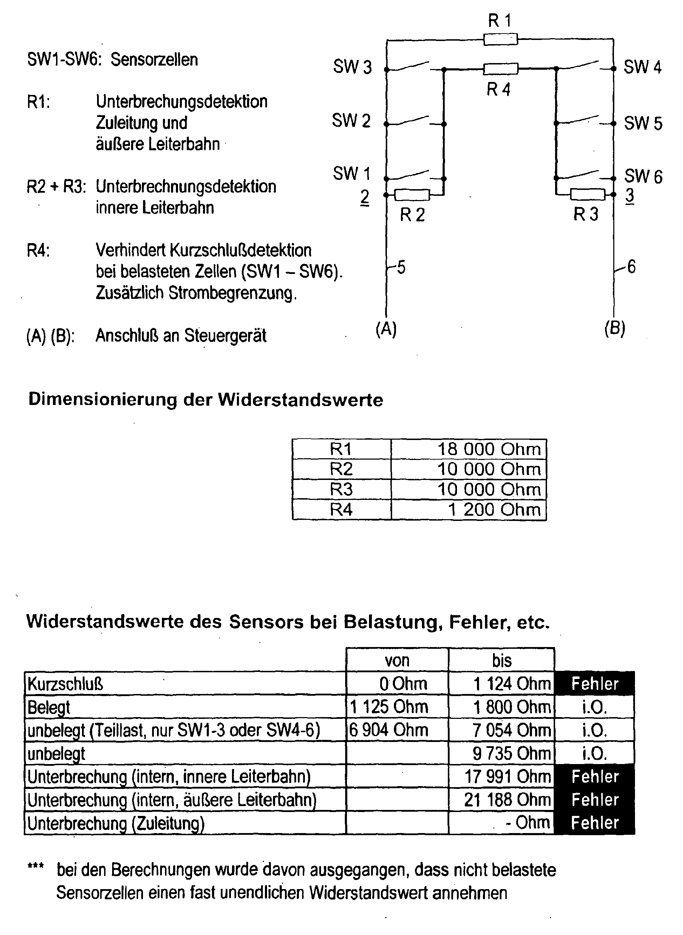

Vorteilhafte Ausgestaltungen der Erfindung sind Gegenstand der weiteren Patentansprüche und werden im Folgenden an Hand der Zeichnung weiter erläutert.

Im folgenden wird eine Ausgestaltung der Erfindung anhand der einzigen Figur beschrieben.

In der Figur ist ein Blockschaltbild einer Ausgestaltung eines erfindungsgemäßen Sitzbelegungssensors gezeigt.

In einer nicht gezeigten Sitzfläche eines Sitzes (ebenfalls nicht gezeigt) sind zwei Schaltelemente 2 und 3 angeordnet, die mehrere Sensorzellen SW1, SW2, SW3 bzw. SW4, SW5 und SW6 enthalten. Die Zellen SW1 bis SW6 sind als einfache Schalter eingezeichnet, deren Widerstandswert im aktivierten Zustand, d.h. bei Belegung gleich Null und im deaktivierten Fall, d.h. bei Nicht-Belegung gleich unendlich ist.

Das Schaltelement 2 ist in Fahrtrichtung gesehen links und das Schaltelement 3 rechts einer in Fahrtrichtung verlaufenden Mittellinie (nicht gezeigt) des Sitzes angeordnet.

Die Sensorzellen SW1, SW2, SW3 einerseits und SW4, SW5, SW6 andererseits sind jeweils in einer Parallelschaltung verschaltet, so dass für die Sensorzellen jedes Schaltelementes eine logische ODER-Verknüpfung realisiert ist. Die beiden Schaltelemente 2 und 3 ihrerseits sind zwischen zwei Anschlussleitern 5 und 6 in Serie geschaltet, so dass sich eine logische UND-Verknüpfung ergibt. Die Anschlussleiter 5 und 6 führen zu einem Steuergerät (nicht dargestellt), dessen Anschlüsse mit A und B symbolisiert sind.

Bei Einsitzen einer Person wird mindestens jeweils eine der Sensorzellen gedrückt und ihr Widerstand von einem sehr hohen Wert (theoretisch gleich unendlich) auf einen Wert gleich der nahe Null reduziert. Diese Widerstandsänderung hat eine Reduktion des Gesamtwiderstands der aus den beiden Schaltelementen 2 und 3 bestehenden UND-Verknüpfung ebenfalls auf den Wert gleich oder nahe Null zur Folge.

Zur Funktionsdiagnose ist jedem der Schaltelemente 2 und 3 ein elektrisches Widerstandselement R2 bzw. R3 parallel und zwischen die beiden Schaltelemente ein weiterer Widerstand R4 geschaltet. Parallel zu den Schaltelementen 2 und 3 verläuft eine elektrische Leitung 7, in der sich ein elektrischer Widerstand R1 befindet. Die Widerstandswerte für die Widerstände R1 bis R4 sind in der mit "Dimensionierung der Widerstandswerte angegebenen Tabelle angegeben.

Bei ordnungsgemäßer Funktion des Sensors oder bei einer Leitungsunterbrechung ergibt sich an den mit A und B bezeichneten Enden der Leitungen 5 und 6 ein Gesamtwiderstandswert, der in der mit "Widerstandswerte des Sensors bei Belastung, Fehler, etc," bezeichneten Tabelle aufgelistet ist. Teillast bedeute dabei, dass nur eines der beiden Schaltelemente 2, 3 und davon mindestens eine der Sensorzellen SW1, SW2, und/oder SW3 bzw. SW4, SW5 und/oder SW6 geschlossen ist.

Durch die in jedem Fall voneinander verschiedenen Werte des Gesamtwiderstands, wie in der Tabelle gezeigt, wird es möglich, mit hinreichender Genauigkeit eine Funktionsprüfung des Sitzbelegungsdrucksensors durchzuführen.

## Patentansprüche

1. Sitzbelegungssensor mit zwei druckaktivierbaren Schaltelementen, die zwei voneinander beabstandeten Flächen eines Sitzes zugeordnet und mittels einer logischen UND-Verknüpfung verschaltet sind, **dadurch gekennzeichnet, dass** jedem Schaltelement (2, 3) ein elektrisches Widerstandselement (R2, R3) parallel geschaltet ist, dessen Widerstandswert zwischen den Widerstandswerten bei aktiviertem und bei nicht-aktiviertem Schaltelement liegt.

2. Sitzbelegungssensor nach Anspruch 1, **dadurch gekennzeichnet, dass** das erste und das zweite Schaltelement (2, 3) in Serie geschaltet sind.

3. Sitzbelegungssensor nach einem der Ansprüche 1 oder 2, **dadurch gekennzeichnet, dass** das erste und/oder das zweite Schaltelement (2, 3) eine Mehrzahl von einzelnen Sensorzellen (SW1, SW2, SW3 bzw. SW4, SW5, SW6) umfasst, die untereinander im Sinne einer logischen ODER-Verknüpfung verschaltet sind.

4. Sitzbelegungssensor nach einem der Ansprüche 1 bis 3, **dadurch gekennzeichnet, dass** die beiden elektrischen Widerstandselemente (R2, R3) denselben Widerstandswert besitzen.

5. Sitzbelegungssensor nach Anspruch 4, **dadurch gekennzeichnet, dass** den beiden Schaltelementen ein weiterer elektrischer Widerstand (R1) parallel geschaltet ist, dessen Widerstandswert zumindest annähernd der Summe der beiden Widerstandselemente (R2, R3) entspricht.

## Claims

1. A seat occupancy sensor with two pressure-activatable switch elements, which are associated with two areas of a seat, which are spaced apart from one another, and connected by means of a logic AND operation, **characterised in that** an electric resistance element (R2, R3), the resistance value of which is between the resistance values with an activated and with a non-activated switch element, is connected in parallel with each switch element (2, 3)..

2. A seat occupancy sensor according to claim 1, **characterised in that** the first and the second switch elements (2, 3) are connected in series.

3. A seat occupancy sensor according to either of claims 1 or 2, **characterised in that** the first and/or the second switch element (2, 3) comprise(s) a plurality of individual sensor cells (SW1, SW2, SW3 and SW4, SW5, SW6), which are connected to one another for a logic OR operation.

4. A seat occupancy sensor according to any one of claims 1 to 3, **characterised in that** the two electric resistance elements (R2, R3) have the same resistance value.

5. A seat occupancy sensor according to claim 4, **characterised in that** a further electric resistor (R1), the resistance value of which corresponds at least approximately to the sum of the two resistance elements (R2, R3), is connected in parallel to the two switch elements.

## Revendications

1. Capteur d'occupation de siège comportant deux éléments de commutation activés par la pression, installés dans deux surfaces d'un siège, écartées l'une de l'autre, et branchées par une combinaison logique ET
**caractérisé en ce qu'**
un élément de résistance électrique (R2, R3) est branché en parallèle sur chaque élément de commutation (2, 3), la valeur de la résistance de chaque élément étant comprise entre la valeur de la résistance à l'état activé et la valeur de la résistance à l'état non activé de l'élément de commutation.

2. Capteur d'occupation de siège selon la revendication 1,
**caractérisé en ce que**
le premier et le second élément de commutation (2, 3) sont branchés en série.

3. Capteur d'occupation de siège selon l'une des revendication 1 ou 2, **caractérisé en ce que**
le premier et/ou le second élément de commutation (2, 3) comprennent plusieurs cellules distinctes de capteur (SW1, SW2, SW3, SW4, SW5, SW6), qui sont branchés les unes auprès des autres selon une combinaison logique OU.

4. Capteur d'occupation de siège selon l'une des revendication 1 ou 3, **caractérisé en ce que**
les deux éléments résistants électriques (R2, R3) ont la même valeur de résistance.

5. Capteur d'occupation de siège selon la revendication 4,
**caractérisé en ce qu'**
une autre résistance électrique (R1) est branchée en parallèle sur les deux éléments de commutation, la valeur de la résistance correspondant au moins sensiblement à la somme des deux éléments résistants (R2, R3).
